# EUROPÄISCHE PATENTSCHRIFT

(11) **EP 1 326 045 B1**
(45) Veröffentlichungstag und Bekanntmachung des Hinweises auf die Patenterteilung: **02.02.2005**
(21) Anmeldenummer: 02406149.1
(22) Anmeldetag: 30.12.2002
(51) Int. Cl.: F16L 33/207, F16L 13/14, F16L 33/22

(54) **Anschlussvorrichtung für wenigstens einen Rohrteil sowie Verfahren zur Herstellung einer Verbindung mit einer solchen Anschlussvorrichtung**
Connector for at least one pipe part and method for making a connection with such a connector
Connecteur pour au moins une section de tuyaux et procédé de fixation d'un tel connecteur

(30) Priorität: 03.01.2002 CH 72002
(43) Veröffentlichungstag der Anmeldung: 09.07.2003
(73) Patentinhaber: GEBERIT TECHNIK AG, 8645 Jona (CH)
(72) Erfinder: Allemann, Rudolf, 8722 Kaltbrunn (CH); Scholz, Jürg, 8841 Gross (CH); Wili, Hansruedi, 8645 Jona (CH)
(74) Vertreter: Groner, Manfred

(56) Entgegenhaltungen:
- EP-A- 0 118 656
- EP-A- 0 942 219
- DE-A- 4 329 650
- DE-C- 4 304 680
- DE-C- 19 735 919
- US-A- 3 156 491
- US-A- 5 195 788

## Beschreibung

Die Erfindung betrifft eine Anschlussvorrichtung nach dem Oberbegriff des Anspruchs 1.

Die US 5,195,788 offenbart eine Anschlussvorrichtung für ein Rohrteil, wobei das Rohrteil auf einen Stutzen eines Fittings aufgeschoben wird. Eine Hülse liegt mit einem Rand an einem Bund des Fittings an und wird mit dem anzuschliessenden Rohrende verpresst. Zur Sicherung ist auf die Hülse ein Spannring aufgesetzt.

Eine weitere Anschlussvorrichtung ist im Stand der Technik aus der DE 197 41 641 A bekannt geworden. Diese weist eine Presshülse auf, die mit dem Fitting vorverbunden ist. Dazu weist die Presshülse an ihrem freien Ende einen ringförmigen Halteansatz auf, der hinter einer Ringschulter des Fittings eingerastet ist. Die Verbindung der Presshülse mit dem Fitting kann auch eine Riegelverbindung sein. Um die Presshülse ohne Werkzeug mit dem Fitting zu verbinden, wird die Presshülse vorübergehend ovalförmig vorverformt. Bei der Entlastung federt die Presshülse von der ovalen Form in die ursprüngliche runde Form zurück und rastet mit dem genannten Halteansatz an der Ringschulter ein. Erwähnt ist in diesem Dokument auch die Möglichkeit einer bajonettverschlussartigen Verriegelung der Presshülse mit dem Fitting. Wie erwähnt, ist bei dieser Anschlussvorrichtung die Presshülse vor dem Aufstecken des Rohrteils mit dem Fitting verbunden. Nach dem Aufschieben des zu verbindenden Rohrendes auf den Anschlussstutzen des Fittings wird die Presshülse verpresst und damit wird eine unlösbare Verbindung zwischen dem Fitting und dem Rohrende geschaffen.

Die US 4,407,532 offenbart eine Anschlussvorrichtung für einen verstärkten Schlauch und weist ebenfalls einen Fitting auf, an dem eine Presshülse befestigt ist. Die Presshülse ist am Fitting vorverbunden. Dazu ist an der Presshülse am freien Ende eine umlaufende Rippe angeordnet, die radial nach innen in eine umlaufende Nut des Fittings einerastet ist.

Der Erfindung liegt die Aufgabe zugrunde, eine Anschlussvorrichtung der genannten Art zu schaffen, die noch einfacher montierbar ist.

Die Aufgabe ist gemäss Anspruch 1 gelöst. Die Verankerung der Hülse am Fitting erfolgt somit durch einen Spannring. Die Verschiebung eines solchen Spannringes ist sehr einfach und ermöglicht eine zuverlässige kraftschlüssige Verbindung zwischen der Hülse und dem Fitting. Die Montage ist besonders einfach, da der Spannring auf der Hülse verschieblich gelagert und so ausgebildet ist, dass er beim Einschieben des Rohrendes von einer Ausgangsposition in eine Spannposition verschoben wird. Der Spannring wird dann somit selbsttätig beim Einschieben des Rohrendes in die Spannposition verschoben. Der Spannring kann in diesem Fall auch als visuelle Anzeige für die vorgesehene Endposition des Rohrteiles dienen.

Die Hülse kann sowohl als Presshülse als auch als Schraubhülse ausgebildet sein.

Weitere vorteilhafte Merkmale ergeben sich aus den abhängigen Patentansprüchen sowie dem Verfahrensanspruch.

Zwei Ausführungsbeispiele der Erfindung werden nachfolgend anhand der Zeichnung näher erläutert. Es zeigen:
- Figur 1: ein Schnitt durch eine erfindungsgemäss Anschlussvorrichtung und schematisch ein angesetztes Presswerkzeug, wobei in der linken Hälfte verschiedene Positionen des Spannringes und in der rechten Hälfte oben der unverpresste Zustand und unten der verpresste Zustand gezeigt sind,
- Figur 2: eine Teilansicht der Anschlussvorrichtung gemäss Pfeil II der Figur 1 und
- Figur 3: ein Schnitt durch eine Anschlussvorrichtung gemäss einer Variante.

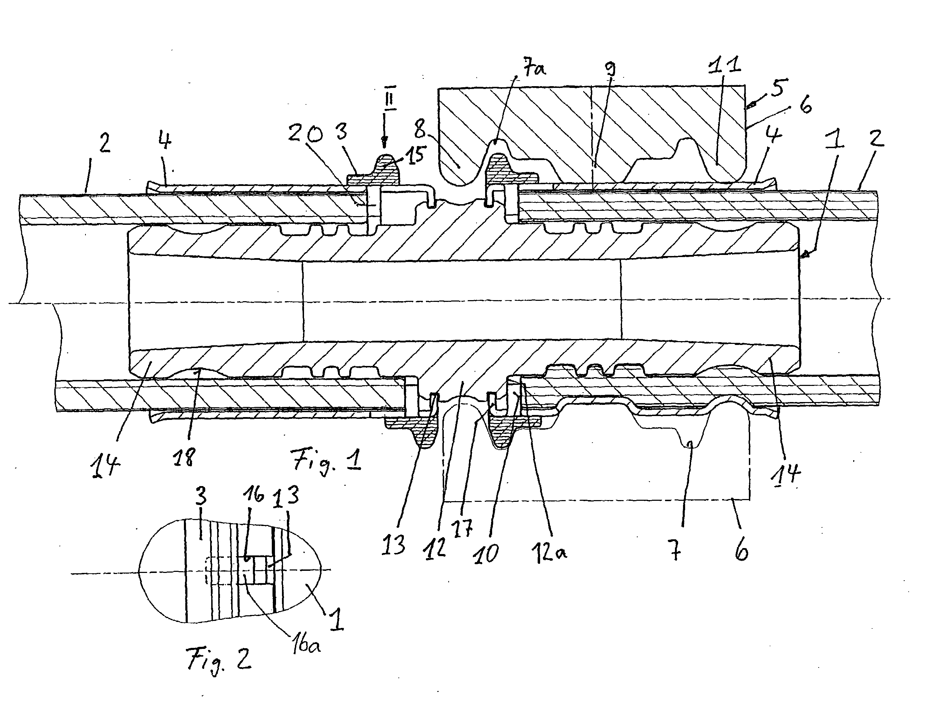

Die Fig. 1 zeigt die Ende zweier Rohrteile 2, die vorzugsweise Wasserrohre und mit einem Presswerkzeug 5 plastisch verformbar sind. Rohrteile 2 sind beispielsweise mehrschichtig ausgebildet und weisen eine hier nicht gezeigte mittlere Schicht aus Aluminium auf. Zum Verbindung der Rohrteile 2 mit einem Fitting 1, ist jeweils eine Presshülse 4 vorgesehen, die aus einem plastisch verformbaren Werkstoff, insbesondere aus Blech hergestellt ist. Der Fitting 1 ist hier ein Doppelfitting mit einem Bund 12 und zwei Anschlussstutzen 14. Grundsätzlich kann dieser Fitting 1 auch für den Anschluss von lediglich einem Rohrteil 2 ausgebildet sein. Denkbar ist auch eine Ausführung, bei welcher der Fitting 1 einen Anschlussstutzen 14 für eine Pressverbindung und einen Anschlussstutzen für eine Schraubverbindung oder eine andere Verbindung aufweist.

Der Bund 12 weist zur Verankerung der beiden Presshülsen 4 jeweils eine umlaufende Nut 13 auf, in die mehrere federelastische Rastzungen 17 eingerastet sind. Diese Rastzungen 17 sind im Querschnitt wie ersichtlich L-förmig und jeweils an einem vorderen Ende einer Hülse 4 angeformt. Grundsätzlich ist auch eine Ausführung mitdenkbar, bei welcher die Hülsen 4 jeweils lediglich eine Rastzunge 17 oder auch andere Rastmittel aufweist.

Auf die Hülsen 4 ist jeweils ein Spannring 3 begrenzt verschiebbar aufgesetzt. Der Spannring 3 ist kreisrund und weist innenseitig wenigstens einen radial nach innen gerichteten Führungsteil 20 auf, der in einen Schlitz 16 der Hülse 4 hineinragt. Der Schlitz 16 ist gemäss Fig. 2 ein stirnseitig offener Schlitz und befindet sich jeweils zwischen zwei Rastzungen 17. Grundsätzlich können am Umfang der Hülse 4 zwei oder mehr solche Schlitze 16 angeordnet sein entsprechend weist der Spannring 6 mehrere solche Führungsteile 20 auf.

Der Spannring 3 weist zudem einen radial vorspringenden und umlaufenden Wulst 15 auf, der die Aufgabe hat, die Pressbacken 6 des Presswerkzeuges 5 während es Pressvorganges zu führen. Hierzu weisen die Pressbacken 6 jeweils eine Führungsrippe 8 sowie in einer Innenfläche 7 eine Vertiefung 7a auf, die korrespondierend zum Spannring 3 ausgebildet ist.

Nachfolgend wird die Erstellung einer Pressverbindung anhand der Figuren 1 und 2 näher erläutert.

Der Rohrteil 2 wird auf die vorgesehene Länge abgelängt und mit einer Stirnfläche 10 versehen. Die Presshülse 4 wird auf den Fitting 1 aufgerastet oder ist bereits am Fitting 1 vormontiert. Der Spannring 3 ist in der in Fig. 1 links oben gezeigten rückgezogene Position oder in diese Position gebracht. Nun wird der Rohrteil 2 auf den Anschlussstutzen 14 aufgeschoben. Hat die Stirnfläche 10, die in Fig. 1 links oben gezeigte Position erreicht, so liegt die Stirnfläche 10 an den Führungsteilen 20 an und beim Weitereinschieben des Rohrteils 2 wird der Spannring 3 in die in Fig. 1 links unter gezeigte Endposition verschoben. In dieser Position fixiert der Spannring 3 die Rastzungen 17 und verankert diese in der entsprechenden Nut 13 des Bundes 12. Die Hülse 4 ist in dieser Position des Spannringes 3 kraftschlüssig mit dem Fitting 1 verbunden. Zum Lösen der Presshülse 4 kann der Spannring 3 in die in Fig. 1 links oben gezeigte Rückposition verschoben werden.

Ist der Spannring 3 in der genannten Endposition, so sind die Schlitze 16 vom Spannring 3 lediglich teilweise überdeckt, sodass Fenster 16a vorhanden sind, durch welche das Ende des eingeschobenen Rohrteils 2 sichtbar sein sollte. Diese Sichtbarkeit des Rohrendes bildet eine visuelle Kontrolle, mit der die Endposition des Rohrendes 2 feststellbar ist. Ist durch ein Fenster 16a der Rohrteil 2 nicht sichtbar, so bedeutet dies, dass dieses nicht bis zur Endposition auf den Fitting 1 aufgeschoben ist.

Nach dem Aufschieben des Rohrteils 2 wird das Presswerkzeug 5 angelegt und durch Schliessen der Pressbacken 6 wird die Hülse 4 und das Ende des Rohrteils 2 plastisch verformt. Der Spannring 3 führt hierbei die Pressbacken 6, wie oben erläutert wurde. Eine mittlere Pressrippe 9 sowie eine weitere Pressrippe 11 verformen im Abstand zueinander den Rohrteil 2 und die Presshülse 4, bis diese die in Fig. 1 rechts unten gezeigte Form aufweisen. Die Aussenfläche 18 des Fittings 1 in an sich bekannter Weise mit Vertiefungen und Rippen versehen, an welchen das verpresste Rohrteil 2 verankert ist. Die Presshülse 4, die ebenfalls entsprechend plastisch verformt ist, bildet ein zusätzliches Verbindungsmittel und verhindert bei einem Temperaturwechsel Dilatationen im Dichtbereich. Die oben genannte Verankerung der Presshülse 4 am Bund 12 erhöht zusätzlich die Festigkeit der Verbindung.

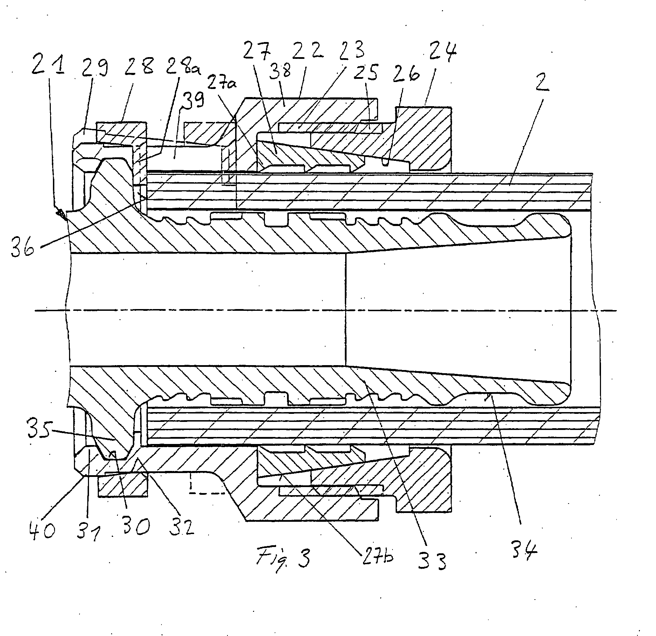

Die Anschlussvorrichtung gemäss Fig. 3 weist eine Steckhülse 22 auf, die einen Keilring 27 mit innenseitig angeordneten Rippen 27a sowie einer Keilfläche 27b aufweist. Auf diesem achsial geschlitzten Keilring 27 ist eine Keilmutter 24 aufgeschoben, die ein Aussengewinde 25 besitzt, die in ein Innengewinde 23 eines Hülsenkörpers 38 einschraubbar ist. Auf den Hülsenkörper 38 ist ein Spannring 28 verschiebbar aufgesetzt. Mit gestrichelten Linien ist die Ausgangsstellung und mit ausgezogenen Linien die Arbeitsstellung gezeigt. An diesem Spannring 28 ist wenigstens ein radial nach innen abgewinkelter Schiebeteil 28a angeformt, der in einen radialen Schlitz 39 des Hülsenkörpers 38 hineinragt. Der Schiebeteil 28a durchragt wie ersichtlich den Schlitz 39 und erstreckt sich bis in den Bereich des Rohrteils 2, derart, dass beim Einstecken des Rohrteils 2 in die Steckhülse 22 der Spannring 28 an einer entsprechenden Stirnseite 36 des Rohrteils 2 einen Anschlag erfährt und verschoben wird.

Der Rohrteil 2 ist auf einen Anschlussstutzen 33 aufgesteckt, der eine Aussenkontur 34 beispielsweise gemäss Fig. 4 aufweist. Ein umlaufender Bund 35 dient zur Verankerung der Steckhülse 22 und als Anschluss für den Spannring 28. Zur Befestigung der Steckhülse 22 am Bund 35 sind am Körper 38 eine radial nach innen gerichtete Rippe 31 sowie eine Rastnut 30 vorgesehen.

Zum Herstellen der Verbindung wird die Steckhülse 22 auf den Fitting 21 aufgesteckt, wobei die Nut 30 am Bund 35 verrastet wird. Der Spannring 28 ist hierbei in der in Fig. 4 gestrichelt gezeigten Ausgangsstellung. Der Keilring 27 ist lose und die Keilmutter 24 nur teilweise in den Körper 38 eingeschraubt. Nun wird der Rohrteil 2 in Fig. 4 von rechts nach links auf den Anschlussstutzen 33 aufgesteckt. Erreicht die Stirnseite 36 den Spannring 28, so wird diese in Fig. 4 nach links in die Arbeitsstellung verschoben, in welcher er mit einer innenseitigen Keilfläche 32 gespannt und auf einer erhabenen Aussenseite 40 aufliegt. Durch den Schlitz 39 und aufgrund der Position des Spannringes 28 ist die erforderliche Endposition des Rohrteils 2 ersichtlich. Nun wird die Mutter 24 in den Hülsenkörper 31 eingeschraubt und durch die Keilflächen 26 und 27b wird der Keilring 27 mit den Rippen 27a gegen den Rohrteil 2 gepresst. Dieser wird hierbei im entsprechenden Bereich plastisch verformt und mit dem Anschlussstutzen 33 verpresst. Der Keilring 27 ist damit fest und kraftschlüssig mit dem Rohrteil 2 verbunden und dieser ist wiederum fest mit dem Anschlussstutzen 33 verbunden. Durch die Festlegung des Rohrteils 2 am Anschlussstutzen 33 ist auch der Spannring 28 festgelegt und entsprechend ist auch der Hülsenkörper 38 fest am Bund 35 verankert. Der Spannring 28 ist durch den Bund 35 und durch den Rohrteil 2 am Schiebeteil 28a festgelegt. An der Spannhülse 28 können auch mehrere, beispielsweise drei am Umfang gleichmässig angeordnete Schiebeteile 28a angeordnet sein. Durch die Festlegung des Spannringes 28 ist eine Lösung des Hülsenkörpers 28 sicher vermieden.

## Patentansprüche

1. Anschlussvorrichtung für wenigstens einen Rohrteil (2), mit einem Fitting (1, 21), der wenigstens einen Anschlussstutzen (14, 33) und einen Bund (12, 35) aufweist, mit wenigstens einer Hülse (4, 22), die mit dem Bund (12, 35) sowie dem Rohrteil (2) verbindbar ist, wobei die Hülse (4, 22) einen Spannring (3, 28) aufweist, der zur Verankerung der Hülse (4, 22) am Fitting (1, 21) in Längsrichtung des Fittings (1, 21) verschieblich gelagert ist, **dadurch gekennzeichnet, dass** der Spannring (3, 28) so ausgebildet ist, dass er beim Einschieben des Rohrteils (2) von einer Ausgangsposition in eine Spannposition verschoben wird.

2. Anschlussvorrichtung nach Anspruch 1, **dadurch gekennzeichnet, dass** der Spannring (3, 28) wenigstens einen radial nach innen ragenden Teil (20, 28a) aufweist, an dem der Rohrteil (2) beim Einschieben mit seiner Stirnfläche (10, 36) anliegt und der in der verankerten Position zwischen dem Bund (12, 35) und der Stirnfläche (10, 36) festgelegt ist.

3. Anschlussvorrichtung nach Anspruch 1 oder 2, **dadurch gekennzeichnet, dass** die Hülse (22) zur ihrer Fixierung am Rohrteil (2) eine Mutter (24) aufweist, die mit einem Keilring (27) zusammenarbeitet.

4. Anschlussvorrichtung nach Anspruch 1, **dadurch gekennzeichnet, dass** die Hülse (4) eine Presshülse ist.

5. Anschlussvorrichtung Anspruch 1 oder 2, **dadurch gekennzeichnet, dass** der Spannring (3) Führungsmittel (15) zur Führung eines Presswerkzeuges (5) aufweist.

6. Anschlussvorrichtung nach Anspruch 5, **dadurch gekennzeichnet, dass** das Führungsmittel (15) ein Wulst (15) am Spannring (3) ist.

7. Anschlussvorrichtung nach einem der Ansprüche 4 bis 6 **dadurch gekennzeichnet, dass** der Spannring (3) in Schlitzen (16) der Presshülse (4) geführt ist und dass diese Schlitze (16) in der Endposition des Spannringes (3) wenigstens ein Sichtfenster (16a) bilden.

8. Verfahren zur Herstellung einer Verbindung mit einer Anschlussvorrichtung gemäss Anspruch 1, **dadurch gekennzeichnet, dass** der Fitting (1, 21) mit der Hülse (4, 22) und dem Spannring (3) auf das Rohrteil (2) aufgeschoben wird, wobei der Spannring (3) von der Ausgangsposition in die Spannposition verschoben wird und dass der Rohrteil (2) und die Hülse (4, 22) am Fitting (1) durch Verpressen befestigt werden.

9. Verfahren nach Anspruch 8, **dadurch gekennzeichnet, dass** die Hülse (4) mit einem Presswerkzeug (5) verpresst wird und hierbei Backen (6) des Presswerkzeuges (5) am Spannring (3) geführt sind.

## Claims

1. Connector device for at least one pipe component (2) with a fitting (1, 21) having at least one pipe connection (14, 33) and a collar (12, 35), with at least one sleeve (4, 22) that can be joined to the collar (12, 35) and to the pipe component (2), whereby the sleeve (4, 22) has a clamping ring (3, 28) that is carried so as to be able to slide in the longitudinal direction of the fitting (1, 21) to anchor the sleeve (4, 22) onto the fitting (1, 21), **characterized in that** the clamping ring (3, 28) is constructed in such a way that it is displaced from an initial position into a clamping position when the pipe component (2) is pushed in.

2. Connector device according to Claim 1, **characterized in that** the clamping ring (3, 28) has at least one part (20, 28a) projecting radially inwards, against which the end face (10, 36) of the pipe component (2) rests when it is pushed in, and which is immobilised between the collar (12, 35) and the end face (10,36) in the anchored position.

3. Connector device according to Claim 1 or 2, **characterized in that**, in order to attach it to the pipe component (2), the sleeve (22) has a nut (24) that interacts with a conical ring (27).

4. Connector device according to Claim 1, **characterized in that** the sleeve (4) is a compression sleeve.

5. Connector device according to Claim 1 or 2, **characterized in that** the clamping ring (3) has means of guidance (15) to guide a pressing tool (5).

6. Connector device according to Claim 5, **characterized in that** the means of guidance (15) is a bulge (15) on the clamping ring (3).

7. Connector device according to one of the Claims 4 to 6, **characterized in that** the clamping ring (3) is guided in slots (16) of the compression sleeve (4) and **in that** these slots (16) form at least one observation window (16a) in the final position of the clamping ring (3).

8. Method for manufacturing a joint with a connector device according to Claim 1, **characterised in that** the fitting (1, 21) with the sleeve (4, 22) and the clamping ring (3) is pushed onto the pipe component (2), whereby the clamping ring (3) is displaced from the initial position to the clamping position, and **in that** the pipe component (2) and the sleeve (4, 22) are fastened onto the fitting (1) by pressure-shaping.

9. Method according to Claim 8, **characterized in that** the sleeve (4) is compressed with a pressing tool (5), whereby jaws (6) of the pressing tool (5) are guided on the clamping ring (3).

## Revendications

1. Dispositif de connexion pour au moins un élément tubulaire (2) comprenant un raccord (1, 21) qui présente au moins un embout (14, 33) et un collet (12, 35), comprenant au moins une douille (4, 22) pouvant être reliée aussi bien au collet (12, 35) qu'à l'élément tubulaire (2), la douille (4, 22) présentant une bague de serrage (3, 28), qui pour ancrer la douille (4, 22) sur le raccord (1, 21) est montée de façon mobile dans la direction longitudinale (1, 21) du raccord, **caractérisé en ce que** la bague de serrage (3, 28) présente une forme telle que lors de l'introduction de l'élément tubulaire (2) elle est déplacée d'une position initiale dans une position de serrage.

2. Dispositif de connexion selon la revendication 1, **caractérisé en ce que** la bague de serrage (3, 28) présente au moins une partie (20, 28a) saillant radialement vers l'intérieur, contre laquelle prend appui l'élément tubulaire (2) par sa surface frontale (10, 36) lors de l'introduction et qui, en position ancrée, est fixée entre le collet (12, 35) et la surface frontale (10, 36).

3. Dispositif de connexion selon la revendication 1 ou 2, **caractérisé en ce que** la douille (22), pour sa fixation à l'élément tubulaire (2), présente un écrou (24) qui coopère avec une bague de calage (27).

4. Dispositif de connexion selon la revendication 1, **caractérisé en ce que** la douille (4) est une douille de compression.

5. Dispositif de connexion selon la revendication 1 ou 2, **caractérisé en ce que** la bague de serrage (3) présente des moyens de guidage (15) pour guider un outil de compression (5).

6. Dispositif de connexion selon la revendication 5, **caractérisé en ce que** le moyen de guidage (15) est un boudin (15) sur la bague de serrage (3).

7. Dispositif de connexion selon l'une quelconque des revendications 4 à 6, **caractérisé en ce que** la bague de serrage (3) est guidée dans des fentes (16) de la douille de compression (4), et **en ce que** ces fentes (16) forment au moins une fenêtre d'inspection (16a) dans la position finale de la bague de serrage (3).

8. Procédé de réalisation d'une jonction avec un dispositif de connexion selon la revendication 1, **caractérisé en ce que** le raccord (1, 21) avec la douille (4, 22) et la bague de serrage (3) est glissé sur l'élément tubulaire (2), la bague de serrage (3) étant déplacée de la position initiale dans la position de serrage, et **en ce que** l'élément tubulaire (2) et la douille (4, 22) sont fixés au raccord (1) par compression.

9. Procédé selon la revendication 8, **caractérisé en ce que** la douille (4) est comprimée au moyen d'un outil de compression (5), des mâchoires (6) de l'outil de compression (5) étant alors guidées sur la bague de serrage (3).
